# EUROPEAN PATENT APPLICATION

(11) **EP 4 818 868 A1**
(43) Date of publication of application: **07.10.2026**
(21) Application number: 24927452.3
(22) Date of filing: 11.07.2024
(51) Int. Cl.: G06F 3/04845, G06F 3/04847, H02S 50/00

(54) **ELECTRONIC DEVICE FOR PROVIDING SCREEN FOR MONITORING SOLAR POWER GENERATION SYSTEM AND CONTROL METHOD THEREOF**

(30) Priority: 29.02.2024 KR 20240030065
(71) Applicant: Hanwha Solutions Corporation, Jung-gu Seoul 04541 (KR)
(72) Inventor: BAEK, Eun Je, Seoul 04541 (KR); MYUNG, Soo Hyun, Seoul 04541 (KR)
(74) Representative: Mooser, Sebastian Thomas
(86) International application number: PCT/KR2024/009975
(87) International publication number: WO 2025/183279

(57) **Abstract**

A method of controlling an electronic device configured to provide a screen for monitoring a solar photovoltaic system includes: outputting a screen on which at least one graphic element visualizing at least one photovoltaic module of the solar photovoltaic system is arranged; acquiring a user input for adjusting a magnification of the screen; detecting a location and a degree of manipulation at which the user input occurs; on the basis of the location and the degree of manipulation, determining a first graphic element from among the at least one graphic element and determining a display level of information related to the photovoltaic module; and according to the display level, outputting the first graphic element and the information regarding the photovoltaic module corresponding to the first graphic element.

## Description

### Technical field

The present disclosure relates to an electronic device for providing a screen for monitoring a solar photovoltaic system and a control method thereof.

### Background Art

Recently, the installation of solar photovoltaic systems for generating energy by using solar energy has increased with an increase in interest in eco-friendly energy technology. Solar photovoltaic systems are systems that produce electricity by collecting solar energy through solar panels, and the electricity produced in this way is supplied to power grids of houses to be supplied as household electricity or stored in batteries and used. Producing power through solar photovoltaic systems is environmentally friendly, may reduce electricity bills in the long term, and thus has recently been in the spotlight.

Along with the development of technology for solar photovoltaic systems, technology for monitoring operations and the like of solar photovoltaic systems and managing the solar photovoltaic systems are recognized as significant technology. There is a need to develop a technology that visually displays a layout drawing corresponding to an actual layout of a module.

### Detailed Description of Disclosure

### Technical Problem

Provided are an electronic device for providing a screen for monitoring a solar photovoltaic system and a control method thereof.

Also, provided are an electronic device that may adjust a magnification of a screen by acquiring a user input and change a display level of monitoring information and a control method thereof.

In addition, provided is a computer-readable recording medium having recorded thereon a program for causing a computer to execute the method. The technical problems to be solved are not limited to the technical problems as described above, and other technical problems may be present.

### Technical Solution

A method of controlling an electronic device configured to provide a screen for monitoring a solar photovoltaic system, according to an aspect of the present disclosure, includes: outputting a screen on which at least one graphic element visualizing at least one photovoltaic module of the solar photovoltaic system is arranged; acquiring a user input for adjusting a magnification of the screen; detecting a location and a degree of manipulation at which the user input occurs; on the basis of the location and the degree of manipulation, determining a first graphic element from among the at least one graphic element and determining a display level of information related to the photovoltaic module; and according to the display level, outputting the first graphic element and the information regarding the photovoltaic module corresponding to the first graphic element.

An electronic device configured to provide a screen for monitoring a solar photovoltaic system, according to another aspect of the present disclosure, includes: at least one memory; at least one processor; an input/output interface; and a display, wherein the processor is configured to control the display to output a screen on which at least one graphic element visualizing at least one photovoltaic module of the solar photovoltaic system is arranged, acquire a user input for adjusting a magnification of the screen, detect a location and a degree of manipulation at which the user input occurs, on the basis of the location and the degree of manipulation, determine a first graphic element from among the at least one graphic element and determine a display level of information related to the photovoltaic module, and control the display to output the first graphic element and the information regarding the photovoltaic module corresponding to the first graphic element, according to the display level.

A computer-readable recording medium according to another aspect of the present disclosure includes a recording medium having recorded thereon a program for causing a computer to execute the method described above.

### Brief Description of Drawings

FIG. 1 is a block diagram illustrating an example of an electronic device for providing a screen for monitoring a solar photovoltaic system, according to an embodiment.
FIG. 2 is a flowchart illustrating an example of a method of controlling an electronic device that provides a screen for monitoring a solar photovoltaic system, according to an embodiment.
FIG. 3 is a view illustrating an example of a method of outputting a graphic element visualizing a photovoltaic module and information regarding the photovoltaic module, according to an embodiment.
FIG. 4 is a view illustrating an example of a method of outputting a graphic element visualizing a photovoltaic module and information regarding the photovoltaic module, according to an embodiment.
FIG. 5 is a view illustrating an example of a method of outputting a graphic element visualizing a photovoltaic module and information regarding the photovoltaic module, according to an embodiment.

### Best Mode

A method of controlling an electronic device configured to provide a screen for monitoring a solar photovoltaic system, according to an aspect of the present disclosure, includes: outputting a screen on which at least one graphic element visualizing at least one photovoltaic module of the solar photovoltaic system is arranged; acquiring a user input for adjusting a magnification of the screen; detecting a location and a degree of manipulation at which the user input occurs; on the basis of the location and the degree of manipulation, determining a first graphic element from among the at least one graphic element and determining a display level of information related to the photovoltaic module; and according to the display level, outputting the first graphic element and the information regarding the photovoltaic module corresponding to the first graphic element.

An electronic device configured to provide a screen for monitoring a solar photovoltaic system, according to another aspect of the present disclosure, includes: at least one memory; at least one processor; an input/output interface; and a display, wherein the processor is configured to control the display to output a screen on which at least one graphic element visualizing at least one photovoltaic module of the solar photovoltaic system is arranged, acquire a user input for adjusting a magnification of the screen, detect a location and a degree of manipulation at which the user input occurs, on the basis of the location and the degree of manipulation, determine a first graphic element from among the at least one graphic element and determine a display level of information related to the photovoltaic module, and control the display to output the first graphic element and the information regarding the photovoltaic module corresponding to the first graphic element, according to the display level.

### Mode for Invention

Although the terms used in embodiments have been selected from general terms currently widely used as much as possible, this may vary according to the intention of an engineer in the field or precedent, the emergence of new technologies, and the like. In addition, in certain cases, there are terms arbitrarily selected by the applicant, and in this case, the meanings thereof will be described in detail in the relevant description. Therefore, the terms used in the description should be defined based on the meanings of the terms and the overall content of the description, rather than simply the names of the terms.

When a part "includes" a component in the entire description, this means that it may further include other components rather than excluding the other components, unless otherwise stated. In addition, the terms "~ unit", "~ module", and the like described herein refer to units that process at least one function or operation and may be implemented as hardware or software, or a combination of hardware and software.

In addition, the terms including ordinal numbers, such as "first" or "second" used in the description, may be used to describe various components, but the components should not be limited by the terms. The terms are used to distinguish one component from another.

According to an embodiment, a "solar photovoltaic system" may refer to a system including a plurality of photovoltaic modules, a plurality of inverters, and a hub server. The plurality of photovoltaic modules may be connected to a string to constitute a solar panel. Module level power electronics (MLPE) attached to the solar panel may transmit, to an inverter, real-time monitoring data including power generation amount, temperature, defect information, and the like of an individual photovoltaic module and unique information of the MLPE. Here, the unique information of the MLPE transmitted to the inverter may include a serial number of the photovoltaic module.

A solar photovoltaic system according to an embodiment of the present disclosure may refer to a power generation system that converts solar energy into electrical energy. The solar photovoltaic system may include a plurality of photovoltaic (PV) modules, and each photovoltaic module may include a micro inverter that converts the generated energy.

A photovoltaic module is a module that generates power by using a photoelectric effect, and a plurality of photovoltaic modules may be connected to each other to constitute a photovoltaic module array. The photovoltaic module array may have a form in which a plurality of photovoltaic modules are connected in series or in parallel. Also, the photovoltaic module array may include at least one photovoltaic module string. According to an embodiment, in the case where the plurality of photovoltaic modules are connected in series, the plurality of photovoltaic modules may form one photovoltaic module array through one photovoltaic module string. In addition, according to an embodiment, in the case where the plurality of photovoltaic modules are connected in parallel, the plurality of photovoltaic modules may form one photovoltaic module array through a plurality of photovoltaic module strings.

A solar photovoltaic system may include a plurality of photovoltaic module arrays, and the photovoltaic module array may include at least one photovoltaic module string including a plurality of photovoltaic modules. Therefore, each of the plurality of photovoltaic modules needs to be individually managed.

According to an embodiment, a "user" may be an installer of a solar photovoltaic system, an owner of the solar photovoltaic system, a manager of the solar photovoltaic system, or the like, and may refer to all users of an electronic device providing a display for monitoring the solar photovoltaic system.

Hereinafter, embodiments are described in detail with reference to the accompanying drawings. However, the embodiments may be implemented in various different forms and are not limited to examples described herein.

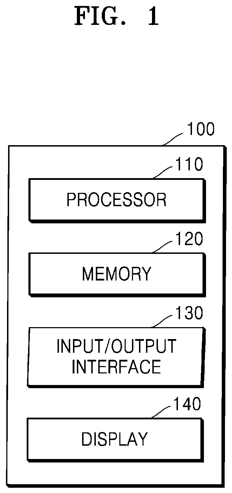

FIG. 1 is a block diagram illustrating an example of an electronic device for providing a screen for monitoring a solar photovoltaic system, according to an embodiment.

It is obvious to those skilled in the art that only components related to the present embodiments are shown in a device 100 shown in FIG. 1 and thus other general-purpose components may be further included, in addition to the components shown in FIG. 1.

For example, the device 100 may be implemented as various types of devices such a mobile device including a notebook PC, a desktop PC, a laptop, a tablet computer, and a smartphone, a server device, and an embedded device. As a detailed example, the device 100 may correspond to a smartphone, a tablet device, an augmented reality (AR) device, an Internet of Things (IoT) device, or the like that performs speech recognition, image recognition, image classification, or the like by using artificial intelligence, but is not limited thereto.

A processor 110 controls the overall operation of the device 100. For example, the processor 110 may generally control a memory 120, a communication unit (not shown), an input/output interface 130, a display 140, and the like by executing programs stored in the memory 120.

For example, the processor 110 may control the display 140 to output a screen on which at least one graphic element visualizing at least one photovoltaic module of a solar photovoltaic system is arranged. In addition, the processor 110 may acquire a user input for adjusting a magnification of the screen and detect a location and a degree of manipulation at which the user input occurs. On the basis of the location and the degree of manipulation, the processor 110 may determine a first graphic element from among the at least one graphic element and determine a display level of information related to the photovoltaic module. The processor 110 may control the display 140 to output the first graphic element and the information regarding the photovoltaic module corresponding to the first graphic element, according to the display level.

According to an embodiment, the screen on which the at least one graphic element is arranged is a virtual layout drawing corresponding to a layout in which the photovoltaic module is actually arranged, and a user may monitor the information related to the photovoltaic module in real time by using the layout drawing. The information related to the photovoltaic module may include at least one of arrangement information, a serial number, an accumulated power generation amount, a real-time monitoring data value, and error information, which regard the photovoltaic module, and inverter information connected to the photovoltaic module.

Here, the arrangement information may include an array name, a tilt value, azimuth, an orientation value, a landscape/portrait, and the like of the photovoltaic module. The accumulated power generation amount may include daily, monthly, weekly, and annual accumulated power generation amounts. The real-time monitoring data may include voltage, current, power generation amount, temperature, defect, and the like of each of a plurality of photovoltaic modules. The real-time monitoring data may be data that is updated at certain time intervals.

According to an embodiment, a user input may be input through the input/output interface 130. The input/output interface 130 may include any type of device through which a user intention may be input, such as a physical keyboard, a virtual keyboard, a mouse, or a trackpad. The display 140 may be any type of device for displaying visual information, such as a mobile device screen including a computer monitor, a flat panel display, a liquid crystal display (LCD), a light emitting diode display, a plasma panel, a touch screen display, or the like. Here, in the case where the display 140 is a touch screen display, the display 140 may operate as the input/output interface 130.

The user input according to an embodiment of the present disclosure refers to all input actions of the user that are input for controlling a zoom function such as screen enlargement or screen reduction. For example, the user input refers to an input from the user, which is made in a preset input method for zoom in or zoom out. For example, the user input according to an embodiment of the present disclosure may include a long press event that is input to activate a zoom mode, a move event that is input in a progress direction preset for zoom-in or zoom-out in the zoom mode, a double-tap event that is input to return to a default size while zoomed in or zoomed out in the zoom mode, a double-tap event that is input to reflect in real time effects such as preview and magnification functions while performing a particular mode, i.e., toggle enlargement and reduction of a screen, and the like.

According to an embodiment, the device 100 may include a touch screen display and may accurately and continuously support, by using an input unit such as a finger or a stylus, a zoom function as much as the user desires on the basis of a location desired by the user. Meanwhile, according to an embodiment of the present disclosure, the zoom mode may be activated by using a particular function key separately provided for the zoom function. A request for the zoom mode may be activated by a long press input occurring on a particular area of a touch screen. In addition, zoom-in or zoom-out may be performed on the basis of a location at which a long press occurs or on the basis of a location newly designated by the user after activating the zoom mode. Accordingly, the device 100 may accurately and continuously support the zoom function as much as the user desires, on the basis of a location desired by the user. Meanwhile, according to an embodiment of the present disclosure, the zoom mode may be activated by using a particular function key separately provided for the zoom function.

According to an embodiment, the device 100 may provide information related to a photovoltaic module corresponding to a layout drawing area displayed on the enlarged screen in more detail than information on the screen before being enlarged. For example, on the enlarged screen, the number of items displayed on the screen from among the pieces of information related to the photovoltaic module may be greater. Alternatively, the device 100 may display information regarding the same item in more detail on the enlarged screen. For example, on the screen before being enlarged, a graphic element corresponding to a photovoltaic module in which an error occurs may be displayed in a different color from a graphic element corresponding to a normal photovoltaic module, and when the user enlarges the graphic element of the photovoltaic module in which the error occurs, a particular error code of the photovoltaic module in which the error occurs may be displayed in the graphic element.

According to an embodiment, the "display level" may be preset to differently display information related to the photovoltaic module according to the magnification of the screen as described above. The display level may be set to divide a range of a screen magnification, which may be implemented on the device 100, into certain sections and display, in each section, an item and a display method (a color, a numerical value, or the like) of information related to a photovoltaic module to be displayed on the display 140.

The processor 110 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

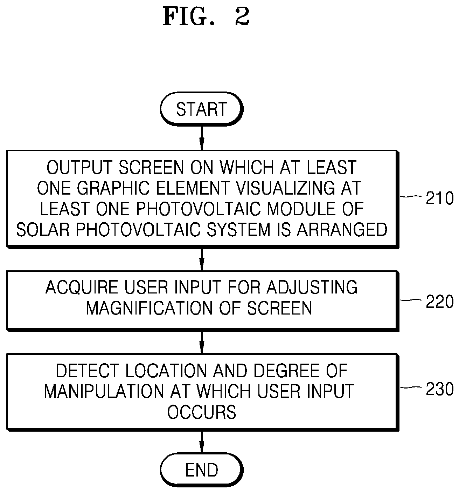

The memory 120 may include any non-transitory computer-readable recording medium. As an example, the memory 120 may include a permanent mass storage device such as random access memory (RAM), read only memory (ROM), a disk drive, a solid state drive (SSD), and flash memory. As another example, the permanent mass storage device such as ROM, an SSD, flash memory, and a disk drive may be a separate permanent storage device that is distinct from a memory. In addition, the memory 120 may store an operating system (OS) and at least one program code (e.g., a code for the processor 110 to perform an operation described below with reference to FIGS. 2 to 5).

The software components may be loaded from a computer-readable recording medium separate from the memory 120. The separate computer-readable recording medium may be a recording medium that may be directly connected to the device 100 and may include, for example, a computer-readable recording medium such as a floppy drive, a disk, a tape, a DVD/CD-ROM drive, and a memory card.

Alternatively, the software components may be loaded into the memory 120 through the communication unit rather than a computer-readable recording medium. For example, at least one program may be loaded into the memory 120 on the basis of a computer program installed by files that are provided through the communication unit by developers or a file distribution system that distributes an installation file of an application (e.g., a computer program for the processor 110 to perform an operation described below with reference to FIGS. 2 to 5).

Hereinafter, an example of a method of controlling an electronic device that provides a screen for monitoring a solar photovoltaic system by operating the device 100 of the present disclosure is described with reference to FIGS. 2 to 5. The method of FIGS. 2 to 5 of controlling an electronic device that provides a screen for monitoring a solar photovoltaic system includes operations processed in time series by the device 100 or the processor 110 shown in FIG. 1. Therefore, even in the case where the above description of the device 100 or the processor 110 shown in FIG. 1 is omitted below, the above description may also be applied to the method of FIGS. 2 to 5.

FIG. 2 is a flowchart illustrating an example of a method of controlling an electronic device that provides a screen for monitoring a solar photovoltaic system, according to an embodiment.

Referring to FIG. 2, in operation 210, the processor 110 controls the display 140 to output a screen on which at least one graphic element visualizing at least one photovoltaic module of a solar photovoltaic system is arranged.

According to an embodiment, the screen on which the at least one graphic element is arranged may be a virtual layout drawing corresponding to a layout in which a photovoltaic module is actually arranged. In other words, the virtual layout drawing may equally reflect a positional relationship between a plurality of individual photovoltaic modules included in the solar photovoltaic system and a layout of an entire module array. According to an embodiment, the virtual layout drawing may further include an orientation table or an orientation identifier indicating orientation information and may visualize orientation information regarding an actual photovoltaic module.

In operation 220, the processor 110 acquires a user input for adjusting a magnification of the screen.

The user input may be input through the input/output interface 130 such as a keyboard or a mouse, or a touch screen display and may include all input actions of a user that are input for control of a zoom function such as screen enlargement or screen reduction.

In operation 230, the processor 110 detects a location and a degree of manipulation at which the user input occurs.

According to an embodiment, the processor 110 may detect a start location and an end location of the user input and calculate a distance between the start location and the end location. After an operation of activating a zoom mode, the processor 110 may detect a start location and an end location of a finger of the user, a stylus, or a mouse cursor performing a zoom-in/zoom-out operation and calculate a distance between the start location and the end location. According to an embodiment, the processor 110 may detect the start location of the user input and count a time for which the user input continues.

According to an embodiment, the user may enlarge the screen of the device 100 including a touch screen in a multi-touch method. The multi-touch method enlarges or reduces the screen according to a change in a distance between points touched by two fingers of the user. In other words, when the user opens two fingers to increase a distance between two touch points, the screen is enlarged, and when bringing the two fingers together to decrease the distance between the two touch points, the screen is reduced. Here, the processor 110 may detect start locations at which touches of two fingers start and end locations at which the touches end, respectively, and calculate distances between the start locations and the end locations, respectively.

In operation 240, on the basis of the location and the degree of manipulation, the processor 110 determines a first graphic element from among the at least one graphic element and determines a display level of information related to the photovoltaic module. In other words, the processor 110 may determine the first graphic element to be displayed on the screen after enlargement/reduction, on the basis of the location at which the user input starts and the degree to (distance to/time for) which the user input continues.

According to an embodiment, the information related to the photovoltaic module may include at least one of arrangement information, a serial number, an accumulated power generation amount, a real-time monitoring data value, and error information, which regard the photovoltaic module, and inverter information connected to the photovoltaic module. According to an embodiment, the display level may be preset to differently display the information related to the photovoltaic module according to the magnification of the screen. The display level may be set to divide a range of a screen magnification, which may be implemented on the device 100, into certain sections and display, in each section, an item and a display method (a color, a numerical value, or the like) of information related to a photovoltaic module to be displayed on the display 140.

In operation 250, the processor 110 controls the display 140 to output, according to the display level, the first graphic element and the information regarding the photovoltaic module corresponding to the first graphic element.

According to an embodiment, the processor 110 may control the display 140 to overlay and output the information with text or a color in an area in which the first graphic element is output. Here, the information refers to information regarding each individual photovoltaic module corresponding to the first graphic element.

According to an embodiment, the processor 110 may control the display 140 to further output information related to the entire solar photovoltaic system in an area in which the first graphic element is not output. For example, the information related to the entire solar photovoltaic system may include accumulated power generation amount values of all photovoltaic modules.

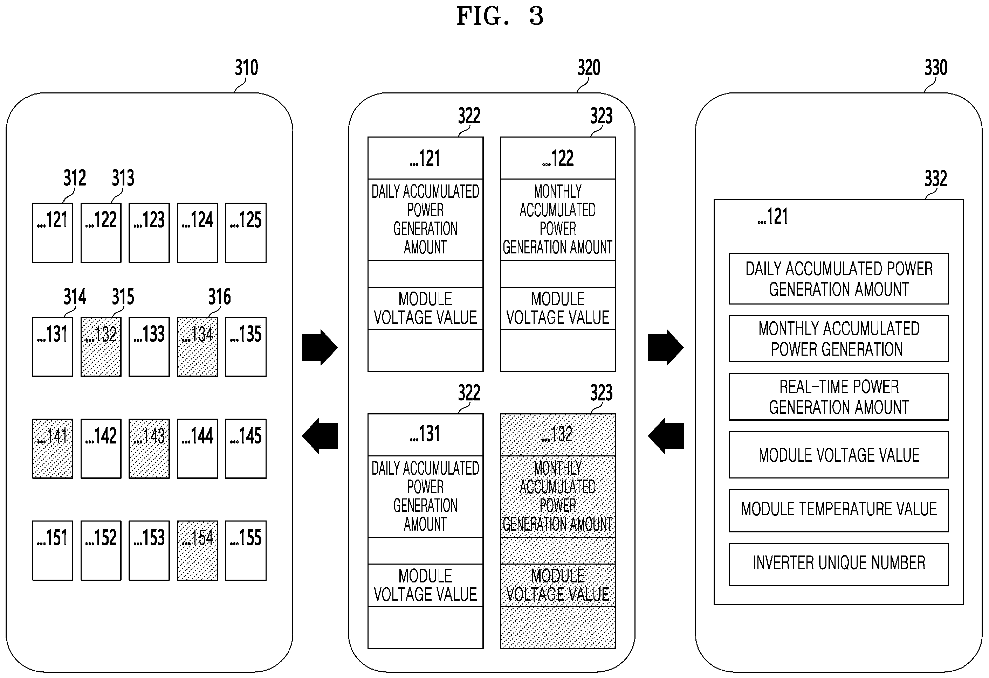

In addition, the processor 110 may control the display 140 to output a second graphic element indicating the magnification on one end of the screen. Here, the information refers to information regarding each individual photovoltaic module corresponding to the first graphic element displayed after enlargement/reduction. Examples of the screen that is output on the display 140, according to an embodiment, are described in detail below with reference to FIGS. 3 to 5.

FIG. 3 is a view illustrating an example of a method of outputting a graphic element visualizing a photovoltaic module and information regarding the photovoltaic module, according to an embodiment.

Referring to FIG. 3, the device 100 according to an embodiment of the present disclosure may output, on the display 140, a layout drawing including first graphic elements 312, 313, 314, 315, and 316 visualizing individual photovoltaic modules of a solar photovoltaic system. The layout drawing may equally reflect a positional relationship between photovoltaic modules of an actual solar photovoltaic system and a layout of a module array. A serial number of each photovoltaic module may be output on a screen 310 outputting the entire area of the layout drawing. In addition, information related to the photovoltaic module may be displayed in a color.

For example, the device 100 may differently display colors of a normal module (a normal photovoltaic module and a photovoltaic module in which an error occurs and may differently display the colors according to the severity of the error. Alternatively, the device 100 may differently display a corresponding color according to a numerical range of a power generation amount. An embodiment of displaying information related to a photovoltaic module in a color is not limited to the described example, and various forms of displaying information regarding another photovoltaic module may be implemented.

The device 100 may acquire a user input for enlarging the screen 310 and on the basis of a location and a degree of manipulation at which the user input is acquired, determine first graphic elements 322, 323, 324, and 325 to be output on an enlarged screen 320. The processor 110 may determine an item and a display method of information related to a photovoltaic module to be output on the enlarged screen 320, on the basis of a magnification and a preset display level of the enlarged screen 320. For example, the device 100 may provide, on the enlarged screen 320, a daily accumulated power generation amount and a module voltage value which are information that may not be identified on the screen 1 having a magnification of 1.

Here, the daily accumulated power generation amount and the module voltage value may be real-time monitoring data values of each of individual photovoltaic modules corresponding to the first graphic elements 322, 323, 324, and 325 that are output on the enlarged screen 320. The processor 110 may control the display 140 to overlay and output information regarding the photovoltaic modules corresponding to the first graphic elements 322, 323, 324, and 325 with text or colors, in respective areas in which a plurality of first graphic elements are output.

The device 100 may acquire, on the enlarged screen 320, a user input for enlarging the screen and on the basis of a magnification of a current screen, and a location and a degree of manipulation of the user input, determine a first graphic element 332 to be output on an enlarged screen 330. The processor 110 may determine an item and a display method of information related to a photovoltaic module to be output on the enlarged screen 330, on the basis of a magnification and a preset display level of the enlarged screen 320. For example, the device 100 may further display a monthly accumulated power generation amount, a real-time power generation amount, a module temperature value, and an inverter serial number which are information that may not be identified on the previous screen 320.

The device 100 may acquire a user input for reducing the screens 310, 320, and 330, and on the basis of a location and a degree of manipulation at which the user input is acquired, determine a first graphic element, and an item and a display method of information related to a photovoltaic module, which are to be output on the reduced screen.

Although not shown in FIG. 3, in the case where reducing the screen to a predetermined threshold magnification or less, the device 100 may also output an image schematically illustrating the entire solar photovoltaic system rather than an individual photovoltaic module.

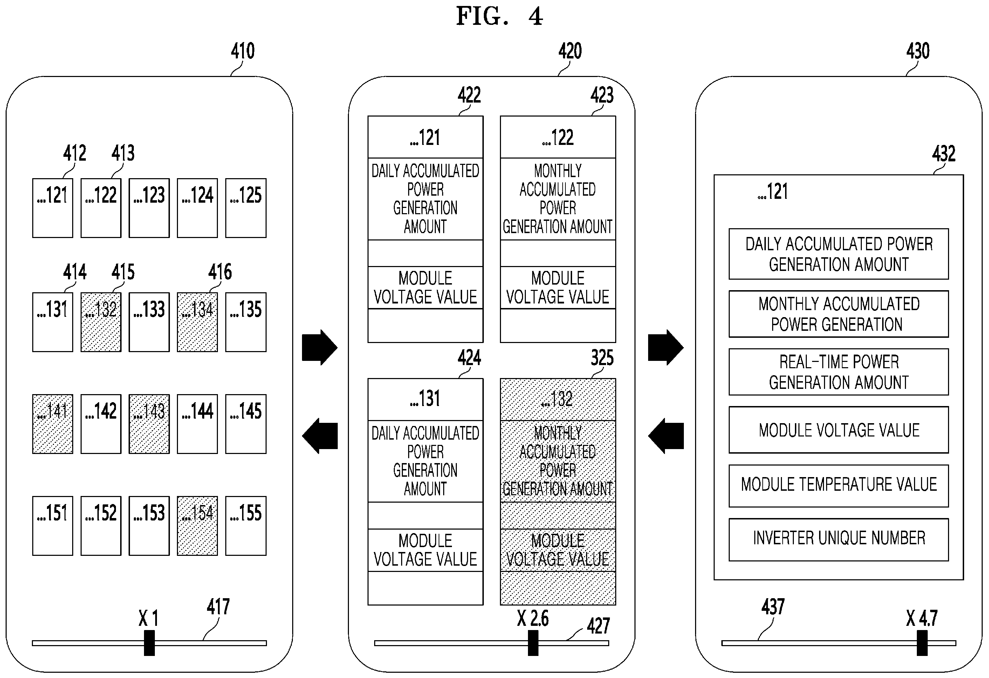

FIG. 4 is a view illustrating an example of a method of outputting a graphic element visualizing a photovoltaic module and information regarding the photovoltaic module, according to an embodiment.

Referring to FIG. 4, the device 100 according to an embodiment of the present disclosure may further output second graphic elements 417, 427, and 437 indicating magnifications on ends of screens 410, 420, and 430. In FIG. 4, the magnification is expressed in the form of ×1, ×2.6, or ×4.7, but it is obvious that the magnification may also be expressed in the form of 100 %, 260 %, or 470 %.

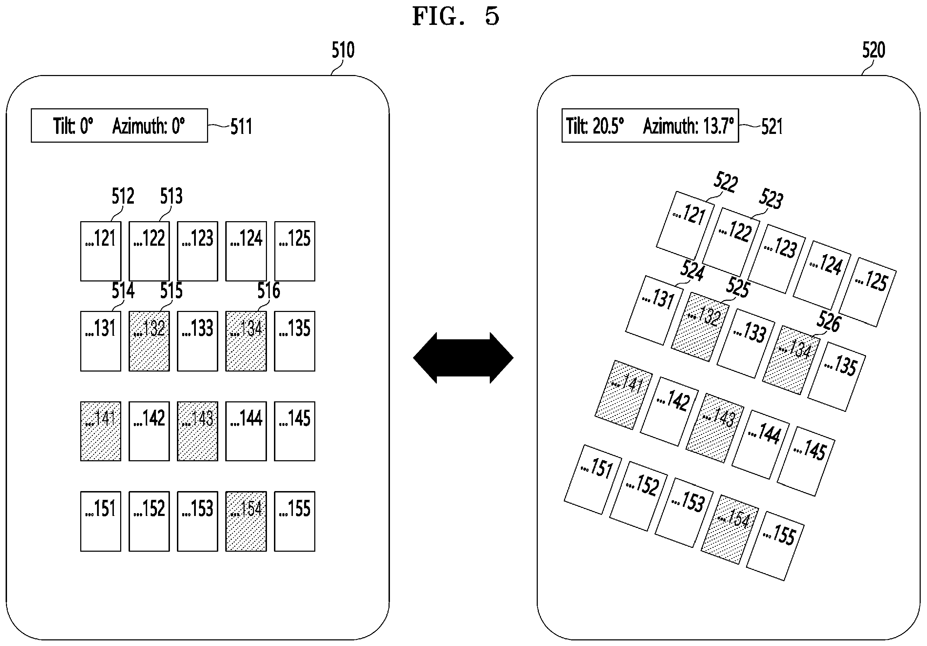

FIG. 5 is a view illustrating an example of a method of outputting a graphic element visualizing a photovoltaic module and information regarding the photovoltaic module, according to an embodiment.

Referring to FIG. 5, a user may adjust an angle of a layout drawing by inputting a manipulation of adjusting angles of screens 510 and 520 on which at least one graphic element is arranged. The device 100 according to an embodiment of the present disclosure may further output graphic elements 511 and 521 indicating angle information regarding the layout drawing.

The operations constituting the method according to the present disclosure may be performed in any appropriate order unless an order of the operations is explicitly stated or stated to the contrary. The present disclosure is not necessarily limited according to the order of description of the operations. The use of all examples or example terms (e.g., and the like) in the present disclosure is simply to describe the present disclosure in detail, and the scope of the present disclosure is limited due to the examples or example terms.

Meanwhile, the above-described method may be written as a program that may be executed on a computer and may be implemented in a general-purpose digital computer that executes the program by using a computer-readable recording medium. In addition, the structure of data used in the above-described method may be recorded on a computer-readable recording medium through various types of means. The computer-readable recording medium includes a storage medium such as a magnetic storage medium (e.g., ROM, RAM, a USB, a floppy disk, a hard disk, or the like) and an optical reading medium (e.g., CD-ROM, DVD, or the like).

Those skilled in the art related to the present embodiment may understand that the present disclosure may be implemented in a modified form without departing from the essential characteristics of the above description. Therefore, the described methods should be considered from an illustrative viewpoint rather than a restrictive viewpoint, and the scope thereof is defined by claims rather than the foregoing description and should be construed as including all differences falling within the scope equivalent thereto.

## Claims

1. A method of controlling an electronic device configured to provide a screen for monitoring a solar photovoltaic system, the method comprising:
outputting a screen on which at least one graphic element visualizing at least one photovoltaic module of the solar photovoltaic system is arranged; acquiring a user input for adjusting a magnification of the screen;
detecting a location and a degree of manipulation at which the user input occurs;
on the basis of the location and the degree of manipulation, determining a first graphic element from among the at least one graphic element and determining a display level of information related to the photovoltaic module; and
according to the display level, outputting the first graphic element and the information regarding the photovoltaic module corresponding to the first graphic element.

2. The method of claim 1, wherein the detecting comprises:
detecting a start location and an end location of the user input; and
calculating a distance between the start location and the end location.

3. The method of claim 1, wherein the information related to the photovoltaic module comprises at least one of arrangement information, a serial number, an accumulated power generation amount, a real-time monitoring data value, and error information, which regard the photovoltaic module, and inverter information connected to the photovoltaic module.

4. The method of claim 1, wherein the outputting comprises:
overlaying and outputting the information with text or a color in an area in which the first graphic element is output; and
outputting, on one end of the screen, a second graphic element indicating the magnification.

5. The method of claim 1, wherein the user input comprises a manipulation of enlarging or reducing the screen on which the at least one graphic element is arranged or adjusting an angle of the screen.

6. A computer-readable recording medium having recorded thereon a program for causing a computer to execute the method of claim 1.

7. An electronic device configured to provide a screen for monitoring a solar photovoltaic system, the electronic device comprising:
at least one memory;
at least one processor;
an input/output interface; and
a display, wherein the processor is configured to control the display to output a screen on which at least one graphic element visualizing at least one photovoltaic module of the solar photovoltaic system is arranged, acquire a user input for adjusting a magnification of the screen, detect a location and a degree of manipulation at which the user input occurs, on the basis of the location and the degree of manipulation, determine a first graphic element from among the at least one graphic element and determine a display level of information related to the photovoltaic module, and control the display to output the first graphic element and the information regarding the photovoltaic module corresponding to the first graphic element, according to the display level.

8. The electronic device of claim 7, wherein the processor is configured to detect a start location and an end location of the user input and calculate a distance between the start location and the end location.

9. The electronic device of claim 7, wherein the information related to the photovoltaic module comprises at least one of arrangement information, a serial number, an accumulated power generation amount, a real-time monitoring data value, and error information, which regard the photovoltaic module, and inverter information connected to the photovoltaic module.

10. The electronic device of claim 7, wherein the processor is configured to control the display to overlay and output the information with text or a color in an area in which the first graphic element is displayed, and control the display to output, on one end of the screen, a second graphic element indicating the magnification.

11. The electronic device of claim 7, wherein the user input comprises a manipulation of enlarging or reducing the screen on which the at least one graphic element is arranged or adjusting an angle of the screen.
